Europäisches Patentamt

European Patent Office

Office européen des brevets

(11) Publication number: **0 479 299 A1**

# EUROPEAN PATENT APPLICATION

(21) Application number: **91116883.9**

(22) Date of filing: **02.10.91**

(51) Int. Cl.5: **C09K 11/02**, H01J 61/46

(30) Priority: **02.10.90 JP 266077/90**

(43) Date of publication of application:
**08.04.92 Bulletin 92/15**

(84) Designated Contracting States:
**DE GB IT NL SE**

(71) Applicant: **Nichia Kagaku Kogyo K.K.**
**No. 491-100, Oka Kaminaka-cho**
**Anan-shi Tokushima-ken(JP)**

(72) Inventor: **Tateiwa, Toshiaki, c/o Nichia Kagaku**
**Kogyo K.K.**
**491-100, Oka, Kaminaka-cho**
**Anan-shi, Tokushima-ken(JP)**
Inventor: **Okada, Kouichi, c/o Nichia Kagaku**
**Kogyo K.K.**
**491-100, Oka, Kaminaka-cho**
**Anan-shi, Tokushima-ken(JP)**
Inventor: **Sadamoto, Tetsuya, c/o Nichia**
**Kagaku Kogyo K.K.**
**491-100, Oka, Kaminaka-cho**
**Anan-shi, Tokushima-ken(JP)**
Inventor: **Hario, Yoshihito, c/o Nichia Kagaku**
**Kogyo K.K.**
**491-100, Oka, Kaminaka-cho**
**Anan-shi, Tokushima-ken(JP)**

(74) Representative: **von Bezold, Dieter, Dr. et al**
**Dr. Dieter von Bezold Dipl.-Ing. Peter Schütz**
**Dipl.-Ing. Wolfgang Heusler Brienner Strasse**
**52**
**W-8000 München 2(DE)**

(54) Silicate phosphor composition, and fluorescent lamp.

(57) A fluorescent lamp includes a bulb, and a phosphor layer which is applied to an inner wall of the bulb and contains silicate phosphor particles based on a silicate as a major luminous component. The silicate phosphor particles are covered on their surfaces uniformly with an oxide of at least one element selected from the group consisting of Ga, In, Tl, Sc, Y, La, Ce, Nd, Sm, Eu, Gd, Dy, Ho, Er, Tm, Yb and Lu in an amount ranging from 0.05 to 10% by weight, based on the weight of the phosphor particles.

The present invention relates to a phosphor composition and a fluorescent lamp, and more particularly to a low-pressure mercury fluorescent lamp utilizing a silicate phosphor as a a major component, and a silicate phosphor composition used therein.

As silicate phosphors applied to a low-pressure mercury fluorescent lamp, there have been known various phosphors including zinc salts, barium salts, strontium salts, magnesium salts, calcium salts and rare earth, which are activated with various activating agents.

The fluorescent lamp having a glass bulb whose inner wall is coated with a silicate phosphor layer has been confronting with a drawback that, during lightening, mercury adheres to the surfaces of the silicate phosphors due to various factors including bombarding of mercury ions generated within the glass bulb, resulting in a deterioration of silicate phosphors. The deterioration of the phosphors will lead to a remarkable lowering of the fluorescent lamp brightness and further to a decrease in the luminous flux maintenance during lightening.

To overcome these problems, Published Examined Japanese Patent Application No. 58-14476 proposes to mix silicate phosphors, e.g., manganese-activated zinc silicate phosphors, with antimony trioxide to prevent the lowering of the luminous flux of the fluorescent lamp. However, this method can not yet attain satisfactory effects.

It is, therefore, an object of the present invention to provide a low-pressure mercury fluorescent lamp, utilizing silicate phosphors, having an improved luminous flux maintenance, as well as a silicate phosphor composition used for the same.

According to the present invention, there is provided a fluorescent lamp comprising a bulb; and a phosphor layer formed on the inner wall of the bulb, the phosphor layer containing, as a main light emitting component, particles of silicate phosphors comprising a silicate as a major component, to whose surface at least one oxide of an element selected from the group consisting of Ga, In, Tl, Sc, Y, La, Ce, Nd, Sm, Eu, Gd, Dy, Ho, Er, Tm, Yb and Lu uniformly adheres in an amount of from 0.05 to 10% by weight based on the weight of the weight of the phosphor particles.

The present invention also provides a silicate phosphor composition comprising silicate phosphor particles, to whose surfaces at least one oxide of an element selected from the group consisting of Ga, In, Tl, Sc, Y, Sa, Ce, Nd, Sm, Eu, Gd, Dy, Ho, Er, Tm, Yb and Lu uniformly adheres in an amount of from 0.05 to 10% by weight based on the weight of the phosphor particles.

Further, the present invention provides a silicate phosphor composition comprising silicate phosphor particles, to whose surfaces at least one oxide-precursor of an element selected from the group consisting of Ga, In, Tl, Sc, Y, La, Ce, Nd, Sm, Eu, Gd, Dy, Ho, Er, Tm, Yb and Lu uniformly adheres in an amount of from 0.05 to 10% by weight in terms of, or calculated as the corresponding oxide, based on the weight of the phosphor particles.

The present invention will be described in detail below.

The present inventors have studied on additives (deterioration-preventing agents or additives) which can suppress deterioration, in particular, lowering of luminous flux maintenance, of silicate phosphor properties, caused by mercury adhesion. They have found that when oxides of specific element are allowed to adhere onto the surfaces of silicate phosphor particles in certain amounts, the lowering of the luminous flux maintenance can be prevented very effectively.

The oxides used in the present invention are oxides of Ga, In, Tl, Sc, Y, Sa, Ce, Nd, Sm, Eu, Gd, Dy, Ho, Er, Tm, Yb and Lu. A mixture of two or more of these oxides can be used. Preferable oxides are yttrium oxide, lanthanum oxide, samarium oxide, gadolinium oxide, dysprosium oxide and/or thulium oxide.

The oxide of the invention is applied to the surfaces of silicate phosphor particles in an amount of from 0.05 to 10 parts by weight based on 100 parts by weight of the silicate phosphor (i.e., from 0.05 to 10% by weight of the weight of the phosphor). An amount of the oxide less than 0.05% by weight will not suppress the deterioration of the silicate phosphor effectively. On the other hand, an amount exceeding 10% by weight will lower the initial luminous flux of the fluorescent lamp, although the deterioration of the silicate phosphors may be prevented, so that it is impractical. The preferable amount of the oxide ranges from 0.1 to 3.0% by weight, based on the weight of the silicate phosphors. Within this preferred range, the oxide of the invention can prevent the deterioration of silicate phosphors without substantial lowering of the initial luminous flux of the fluorescent lamp.

To produce a discharge lamp in accordance with the present invention, a phosphor-coating liquid is prepared first, in which the silicate phosphor particles are dispersed and which contains the deterioration-preventing agent (oxide). The coating liquid is then applied to the inner wall of the bulb (usually, a glass bulb), followed by baking. Note that the deterioration-preventing agent of the invention is not doped into the phosphor.

Any silicate phosphor can be used in the present invention. Examples of silicate phosphor include manganese-activated zinc silicate phosphor [$Zn_2SiO_4:Mn^{2+}$]; barium silicate, strontium silicate, and magnesium silicate phosphors, activated with lead, and a composite phosphor of these compounds [e.g., $(Sr, Ba, Mg)_3Si_2O_4:Pb^{2+}$, $(Sr, Zn, Mg)_3Si_2O_7:Pb^{2+}$, $BaSi_2O_5:Pb^{2+}$]; lead and manganese-activated calcium silicate phosphor [$CaSiO_3:Pb^{2+}$, $Mn^{2+}$]; europium-activated silicate phosphor [e.g., $Sr_2Si_3O_8SrCl_2:Eu^{2+}$, $Ba_3MgSi_2O_8:Eu^{2+}$, $(Sr, Ba)Al_2Si_2O_8:Eu^{2+}$]; cerium and terbium-activated rare earth silicate phosphor [e.g., $Y_2SiO_5:Ce^{3+}$, $Tb^{3+}$], etc., but are not limited thereto. Usually, silicate phosphor particles have a diameter ranging from about 2 to 10 $\mu$m.

The phosphor-coating liquid contains an organic binder, in addition to the silicate phosphor particles and the deterioration-preventing agent. The binder is used to adjust the viscosity of coating liquid so as to attain an easy application of the coating liquid and is contained in the phosphor-coating liquid in an amount sufficient to obtain the viscosity of about 20 to 60 centipoises.

The binder is soluble in a medium or solvent (an organic solvent or water) employed in the phosphor-coating liquid. When an organic solvent such as butyl acetate, xylene, etc., is employed in the phosphor-coating liquid, cellulosic binders such as nitrocellulose, ethylcellulose, etc., can be used. On the other hand, water-soluble binders such as polyethyleneoxide (PEO), water-soluble cellulose compounds (e.g., hydroxyethylated cellulose, hydroxypropylated cellulose, carboxymethylcellulose), water-soluble polyacrylates (e.g., polymethyl methacrylate), etc., can be used for an aqueous phosphor-coating liquid.

Usually, the phosphor-coating liquid contains the solvent in an amount of from 40 to 60% by weight. The phosphor-coating liquid may also contain a surface active agent and/or a defoaming agent, as in the conventional phosphor-coating liquid.

For preparation of the phosphor-coating liquid, a phosphor composition of the invention can be prepared which comprises silicate phosphor particles covered with the oxide of the invention, and the resultant silicate phosphor composition can be used in preparing the phosphor-coating liquid. Namely, a binder solution which is separately prepared is added to the phosphor composition, and mixed well, obtaining a desired phosphor-coating liquid.

The silicate phosphor composition in accordance with the present invention can be prepared by any of the following three methods.

(1) The silicate phosphor particles are sprayed with a suspension of the oxide of the invention in water or in an organic solvent, followed by drying.

More specifically, the silicate phosphor can be conventionally prepared by mixing the phosphor raw material with a flux such as a halide, firing the mixture (firing temperature: about 900 to 1300°C), followed by grinding, washing with water and drying. Thus obtained silicate phosphor particles are transferred in, for instance, a transferring pipe, by hot air stream (temperature of e.g., 70 to 100°C), during which the suspension of the oxide is sprayed thereto from a nozzle at a downstream side by mean of a back filter. A aqueous solution (pH adjusted to 7 or more with aqueous ammonia) of an oxide-precursor, which will be described later, may be used in place of the suspension. In this manner, the silicate phosphor particles, the surfaces of which are uniformly covered with the oxide of the invention can be obtained.

(2) The silicate phosphor particles and the oxide of the present invention in a powder form are mixed together, to which a solvent to be used in the phosphor-coating liquid is added and stirred well. Then, the resultant mixture is dried.

In the drying for preparation of the phosphor composition, as is the same in method (1) above, an absolute dryness of the phosphor particles is not required, but a dryness to such an extent will be sufficient that the so dried phosphor particles can be treated as powder in the subsequent steps. Therefore, drying may be carried out at a temperature of, for instance, 70 to 100°C. The drying time may be 3 to 15 hours, depending on the amount to be dried.

(3) The silicate phosphor particles are added with the suspension of the oxide of the invention, and the resultant mixture is mixed well and dried. The drying can be conducted as in method (2) above.

A second way of preparing the silicate phosphor-coating liquid involves mixing silicate phosphor particles, a binder solution separately prepared, and a suspension of the oxide of the present invention prepared separately.

The oxide of the invention, serving as a deterioration-preventing agent, may be enough to cover the surfaces of the silicate phosphor particles present in a phosphor layer applied to the inner wall of a bulb in the specified amount, as previously mentioned, after baking (baking temperature: up to 600°C) of the glass bulb or after working such as forming of the bulb into a circular shape (forming temperature: around 800°C). Therefore, in preparing the silicate phosphor composition and phosphor-coating liquid, use may be made of a precursor of the oxide, in place of the oxide. The precursor of the oxide, oxide-precursor, is capable of being converted into the corresponding oxide, at a stage until the phosphor-coating liquid is coated on the bulb (e.g., during the preparation of the coating liquid), by the hydrolysis or the like. Alternatively, the precursor is capable of being converted into the oxide by decomposition caused by an elevated temperature encountered in the baking or forming process.

Examples of such precursors may include hydroxides; inorganic acid salts such as nitrates, sulfates, borates, and phosphates; halides such as chlorides, and bromides; and organic acid salts such as acetates. Specific examples of the precursor include lanthanum hydroxide, gadolinium hydroxide, samarium hydroxide, yttrium nitrate, lanthanum nitrate, yttrium chloride, lanthanum chloride, dysprosium chloride, yttrium acetate, and lanthanum acetate, etc. Among these, the hydroxides, nitrates, chlorides and acetates are particularly useful. Needless to say, the oxide-precursor is used in an amount of 0.05 to 10% by weight in terms of, or calculated as, the corresponding oxide, based on the phosphor particles.

The above precursors, as is readily recognized by those skilled in the art, include those soluble in the solvent (organic solvent or water) used for the preparation of the phosphor-coating liquid or phosphor composition, and those insoluble in the solvent (organic solvent or water). For instance, the hydroxides are insoluble in both water and organic solvents, while the inorganic and organic acid salts are soluble in water, but insoluble in organic solvents. The precursors which are soluble in the solvents used can be used in the form of a solution in such solvent. On the other hand, those which are insoluble in the solvent used (the oxide also belonging to this type) can be used in the form of fine particles. Usually, the fine particles have a particle diameter of approx. 0.01 to 2 $\mu$m.

Meanwhile, when the precursor is used in the form of an aqueous solution, an alkaline hydroxide may be added to the solution to adjust its pH value to 7.3 - 10.5. Also, the pH value of the aqueous phosphor-coating liquid containing the aqueous solution of the precursor may be adjusted in the same manner. Such an adjustment of pH value of the aqueous phosphor-coating liquid will provide a stable viscosity of the coating liquid over a long time, and can inhibit the growth of microorganisms, without damaging the manufacturing equipments. The pH adjustment may be carried out by adding the alkaline inorganic hydroxide during or after the preparation the phosphor-coating liquid. Alternatively, the alkaline hydroxide may be added directly to the precursor solution used for the preparation of the phosphor-coating liquid.

The alkaline hydroxide may include sodium hydroxide, potassium hydroxide, and ammonium hydroxide. Most preferred is ammonium hydroxide, which does not leave impurities remaining in the final phosphor layer. It is advantageous that the alkaline compound is added in the form of an aqueous solution. The pH value of the aqueous phosphor-coating liquid ranges preferably from 8.5 to 9.8. By the addition of the alkaline hydroxide, the precursor present in the phosphor-coating liquid is converted into colloidal hydroxide, facilitating the adhesion to the surfaces of the phosphor particles. Further, by such an adjustment of the pH value of the aqueous solution of the precursor at the preparation of the phosphor composition, silicate phosphor particles covered with the hydroxide at their surfaces can be obtained.

The deterioration-preventing agent or additive of the invention uniformly covers the surface of each silicate phosphor particle, and can suppress the deterioration of the silicate phosphors caused by sputtering, adsorption of mercury, and/or mercury ray of 184.5 nm wavelength, etc., during the lightening, thus improving the luminous characteristics of the fluorescent lamp such as initial luminous output, luminous flux maintenance, etc., especially the luminous flux maintenance, to a large extent.

Further, the deterioration-preventing agent of the invention can enhance the adhesive strength of the resulting phosphor layer to the inner wall of the bulb, so that additional adhesive materials are not required particularly. However, when a further improved adhesive strength of the phosphor layer is required as in a case where a circular-tube fluorescent lamp is fabricated, a conventional adhesive material may be added to the phosphor-coating liquid. Examples of the adhesive material may include fine particles of aluminum oxide, borates of alkaline earth metals, etc. The addition of such adhesive materials will not impair advantages of the present invention, but may even enhance the effects of the invention. The adhesive material may be used in an amount of from about 0.001 to 5% by weight of the weight of the silicate phosphor.

The phosphor-coating liquid prepared above is applied to the inner wall of the glass bulb, and baked, in a conventional manner. The baking may be carried out at a temperature of up to about 600°C, usually from about 450 to 550°C. The baking time may usually be about 15 to 30 minutes. During baking, the binder in the phosphor layer will be scattered and removed. At this time, the oxide-precursor, when used as a deterioration-preventing agent, can be converted into the corresponding oxide. Meanwhile, the oxide formed from the hydroxide by baking is dehydrated material, i.e., a composite oxide, of which structure can not yet be defined clearly. Such a composite oxide is also within the scope of the present invention.

The thickness of the phosphor layer after baking is usually from 10 to 30 $\mu$m.

After formation of the phosphor layer on the inner wall of the glass bulb, the straight-tube bulb may be formed into a circular shape, if desired. Then, the bulb is evacuated, charged with a rare gas together with mercury, and caps or headers are attached to both ends of the bulb, in a conventional manner, to prepare a fluorescent lamp. The structure itself of the fluorescent lamp of the invention is substantially the same as the conventional one including well-known straight-tube and circular-tube structures, and thus, a drawing figure illustrating the structure is believed to be unnecessary.

As has been explained above, the silicate phosphor fluorescent lamp having an excellent luminous flux maintenance can be prepared in accordance with the present invention.

Meanwhile, of the lanthanoids, Pr, Tb and Pm are excluded from the present invention. This is because the oxides of these excluded elements are colored, not white, and tend to lower the initial luminous output. Nevertheless, the oxides of these elements are found to be capable of improving the luminous flux maintenance remarkably.

The present invention will be described below by way of its examples.

Example 1

0.2 g of lanthanum hydroxide powder and 100 g of 1 wt.% solution of nitrocellulose in butyl acetate were fed in a 500-cc porcelain container and were ground by means of alumina balls for one hour. After grinding, the resultant nitrocellulose solution in butyl acetate dispersing the lanthanum hydroxide was removed of the alumina balls, and was added with 100 g of lead-activated barium disilicate phosphor particles ($BaSi_2O_5:Pb^{2+}$). The mixture was stirred for one hour to prepare a homogenous phosphor-coating liquid.

The obtained phosphor-coating liquid was applied to the inner wall of a straight-tube glass bulb for a 40WSS fluorescent lamp by the conventional method, and baked at 450°C for 15 minutes in an electric furnace, followed by cooling. Thus, the glass bulb having a phosphor layer in a thickness of 20 $\mu$m was obtained. The phosphor particles in the phosphor layer were confirmed to be covered uniformly with the lanthanum oxide on their surfaces. Then, the glass bulb was evacuated, charged with rare gas together with mercury and was attached with headers at both ends thereof in a conventional manner, preparing a 40WSS straight-tube fluorescent lamp. The fluorescent lamp has a main luminous peak wavelength of approx. 351 nm, i.e., near ultraviolet luminous, and is serviceable as a black light for jewelry judgment, etc.

For comparison, a fluorescent lamp was prepared in the same way as in Example 1 except for the addition of lanthanum hydroxide (Comparative Example 1).

Both lamps were respectively measured in terms of initial luminous output as well as luminous flux maintenance under the same condition. The results showed that the lamp of Example 1 has achieved improvements in the initial luminous output by 5%, and in the luminous flux maintenances after 100-hour lightening and after 500-hour lightening by 12% and 17% respectively, as compared with the lamp of Comparative Example 1.

Example 2

100 g of lead-activated barium disilicate phosphor particles were added to 30 cc of deionized water, to obtain a suspension. To the suspension, 0.5 g of yttrium chloride ($YC\ell3$) was added and dissolved therein with stirring. The resultant phosphor suspension was added with an aqueous ammonia to adjust the pH value to 9.0, and was allowed to stand for one hour. The resultant suspension was dewatered to dryness, and passed through a sieve of 300 mesh, obtaining the silicate phosphor particles, of which surfaces were covered with the additive of the present invention.

The coated-silicate phosphors were added to 100 cc of 1 wt.% nitrocellulose solution in butyl acetate, and the mixture was mixed for one hour, to obtain a homogeneous phosphor-coating liquid.

A fluorescent lamp was prepared using the phosphor-coating liquid obtained above, as in Example 1. The lamp was measured in terms of the initial luminous output as well as the luminous flux maintenances after 100-hour lightening and after 500-hour lightening under the same condition as in Example 1.

The results showed that the lamp of Example 2 has achieved improvements in the initial luminous output by 3% and in the luminous flux maintenances after 100-hour lightening and after 500-hour lightening by 17% and 23% respectively, as compared with the lamp of Comparative Example 1.

Example 3 - 6

Fluorescent lamps were respectively prepared as in Example 1, using compounds as listed in Table 1, instead of the lanthanum hydroxide, in amounts as shown in Table 1. Each lamp thus prepared was measured in terms of the initial luminous output as well as the luminous flux maintenances of after 100-hour lightening and after 500-hour lightening under the same condition as in Example 1. The results are shown also in Table 1. From the results, it will be clearly understood that the employment of the additive of the invention can produce a prominent improvement in luminous flux characteristic. Meanwhile in Table 1, there are also shown the results of Examples 1 and 2, as well as those of Comparative Example 1.

Table 1

| Example | Compund added | | Initial luminous | Luminous flux mainteance (%) | |
|---|---|---|---|---|---|
| | Chemical composition | Amount (%) | Output (%) | After 100 hours | After 500 hours |
| Comparative Ex.1 | - | 0 | 100 | 77 | 63 |
| Example 1 | La(OH)$_3$ | 0.2 | 105 | 89 | 80 |
| Example 2 | YCℓ$_3$ | 0.5 | 103 | 94 | 86 |
| Example 3 | Gd(OH)$_3$ | 0.1 | 107 | 85 | 77 |
| Example 4 | Tm$_2$O$_3$ | 1.0 | 103 | 88 | 79 |
| Example 5 | Dy$_2$O$_3$ | 0.5 | 104 | 85 | 78 |
| Example 6 | Sm(OH)$_3$ | 0.5 | 103 | 91 | 82 |

## Claims

1. A silicate phosphor fluorescent lamp comprising:
   a bulb; and
   a phosphor layer which is applied to an inner wall of said bulb, and contains silicate phosphor particles based on silicates as a major luminous component, said silicate phosphor particles being uniformly covered on their surfaces with at least one oxide of at least one element selected from the group consisting of Ga, In, Tl, Sc, Y, La, Ce, Nd, Sm, Eu, Gd, Dy, Ho, Er, Tm, Yb and Lu in an amount ranging from 0.05 to 10% by weight relative, based on the weight of said phosphor particles.

2. The fluorescent lamp according to claim 1, characterized in that said oxide adheres to the surfaces of said phosphor particles in an amount ranging from 0.1 to 3.0% by weight, based on the weight of said phosphor particles.

3. The fluorescent lamp according to claim 1, characterized in that said oxide is an oxide of yttrium, lanthanum, samarium, gadolinium, dysprosium or thulium.

4. A silicate phosphor composition comprising:
   silicate phosphors; and
   at least one oxide of at least one element selected from the group consisting of Ga, In, Tl, Sc, Y, La, Ce, Nd, Sm, Eu, Gd, Dy, Ho, Er, Tm, Yb and Lu, covering the surfaces of said phosphor particles, in an amount ranging from 0.05 to 10% by weight relative, based on the weight of said phosphor particles.

5. The silicate phosphor composition according to claim 4, characterized in that said oxide adheres to the surfaces of said phosphor particles in an amount ranging from 0.1 to 3.0% by weight, based on the weight of said phosphor particles.

6. The silicate phosphor composition according to claims 4, characterized in that said oxide is an oxide of yttrium, lanthanum, samarium, gadolinium, dysprosium or thulium.

7. A silicate phosphor composition comprising:
   silicate phosphor particles; and
   at least one precursor of an oxide of at least one element selected from the group consisting of Ga, In, Tl, Sc, Y, La, Ce, Nd, Sm, Eu, Gd, Dy, Ho, Er, Tm, Yb and Lu in, covering the surfaces of said phosphor particles in an amount ranging from 0.05 to 10% by weight in terms of said oxide, based on the weight of said phosphor particles.

8.  The silicate phosphor composition according to claim 7, characterized in that said precursor adheres to the surfaces of said phosphor particles in an amount ranging from 0.1 to 3.0% by weight in terms of said oxide, based on the weight of said phosphor particles.

9.  The silicate phosphor composition according to claim 7, characterized in that said precursor is a hydroxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 680 231   (T.YAMAURA & AL) <br> * the whole document * * <br> – – – | 1,4 | C 09 K 11/02 <br> H 01 J 61/46 |
| X | PATENT ABSTRACTS OF JAPAN vol. 12, no. 22 (C-470)22 January 1988 <br> & JP-A-62 174 290 ( KASEI OPTONIX ) 31 July 1987 <br> * abstract * * <br> – – – | 1,7 | |
| A | PATENT ABSTRACTS OF JAPAN vol. 5, no. 106 (C-62)10 July 1981 <br> & JP-A-56 047 479 ( HITACHI ) 30 April 1981 <br> * abstract * * <br> – – – – – | 1-6 | |

| | |
|---|---|
| | TECHNICAL FIELDS SEARCHED (Int. Cl.5) |
| | C 09 K <br> H 01 J |

**The present search report has been drawn up for all claims**

| Place of search | Date of completion of search | Examiner |
|---|---|---|
| The Hague | 10 January 92 | DROUOT M.C. |